# EUROPEAN PATENT SPECIFICATION

(11) **EP 0 544 388 B1**
(45) Date of publication and mention of the grant of the patent: **06.05.1999**
(21) Application number: 92305453.0
(22) Date of filing: 15.06.1992
(51) Int. Cl.: H02G 1/08, G02B 6/44

(54) **Wire installation device**
Vorrichtung zur Installation eines Drahtes
Dispositif d'installation d'un fil

(30) Priority: 28.11.1991 JP 314167/91
(43) Date of publication of application: 02.06.1993
(73) Proprietor: Horii, Kiyoshi, Tokyo (JP); TOA KIKAI KOGYO CO., LTD., Shimonoseki-shi, Yamaguchi (JP)
(72) Inventor: Ohsumi, Kakuji, Shimonoseki-shi, Yamaguchi (JP)
(74) Representative: Leale, Robin George

(56) References cited:
- EP-A- 0 457 986
- FR-A- 2 102 198
- US-A- 3 927 866

## Description

This invention relates to a device for use in feeding a flexible elongate member through a tube. The invention is applicable to the feeding of all kinds of flexible elongate members, such as for example wires, cables, filaments, fibers, optical fibers, and the like, all of which are intended to be encompassed by the term "wire" as used herein.

It is often required to feed wires through small-diameter tubes, for example in office buildings, factories, communications facilities and private homes, and various methods of achieving this have been developed. Generally speaking, the known methods comprise ones using compressed fluid and ones not using compressed fluid. As to the former method, the concept of supplying compressed fluid through a tubular passage in order to feed a wire through the same is known. As to the latter method, a process of manually forcing a wire through a tube by means of another wire is known.

However, there is a serious restriction on the tube diameter which permits use of the former method; specifically, the smaller the tube diameter, the more difficult it is to feed a wire therethrough. Furthermore, since the wire is (unavoidably) fed when the fluid is in a turbulent state, vibration of the wire results which causes it to contact the tube inner wall, thus generating a considerable amount of friction. Consequently, if the tube has many bends, frictional contact between the tube inner wall and the wire makes the operation very difficult. Indeed, using this method it is often difficult to feed a wire through a tube of as little as 20m to 30m in length.

In the latter method, on the other hand, the wire is manually forced into the tube, and this is often difficult. Even to feed a wire through a short length of tube by this method requires a large amount of force.

In order to overcome these problems of the known methods, we have already proposed (in EP-A-0457986) a new method which permits the easy and efficient feeding of a wire through a narrow tube having many bends, and an apparatus for carrying out such method. This method and apparatus are-based on the setting up of Coanda spiral flow in a fluid for feeding the wire.

Coanda spiral flow is notable for the fact that there are large differences in velocity and density between the flow at the axis of the fluid stream and the flow at the periphery, and that there is a steep velocity distribution, i.e. the velocity of the axial flow is high while that at the periphery is low. Typically the degree of turbulence is 0.09, less than half that for a turbulent flow of 0.2, thus providing conditions substantially different from turbulent flow. It also exhibits the feature that a synthesis of an axial vector and a radial vector results in a specifically spiral flow.

Making use of the fact that Coanda spiral flow in a tube converges along the tube axis, a device for feeding a wire may be developed which permits of easy and efficient wire feeding even through a narrow tube having many bends.

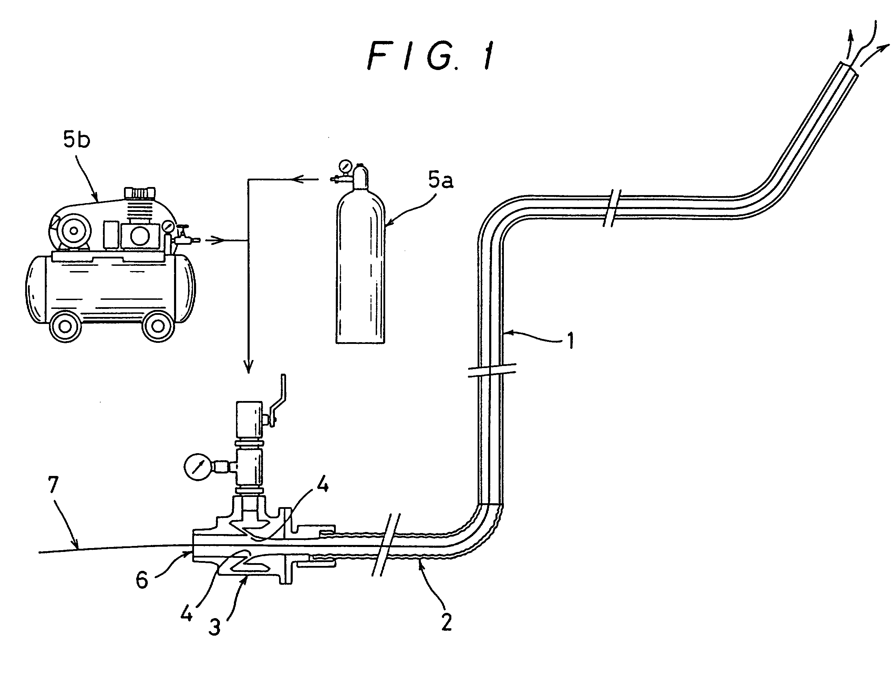

To assist in describing the present invention, certain features of our earlier proposals will first be explained. Thus, referring to Fig. 1, a Coanda spiral flow unit 3 is connected through an optional flexible hose 2 to a tube 1 through which a wire 7 is to be fed. Compressed fluid is supplied in the wire feeding direction through Coanda slit 4 of the unit 3, from a compressed fluid supply means 5. The wire 7 is fed into the inlet or suction port 6 of the unit 3, and is then drawn along by the spiral flow in the flexible hose 2 and the tube 1, whereby feeding of the wire proceeds at a high speed and without any deleterious friction with the tube wall.

As the compressed fluid supply means 5, an air compressor 5b or a cylinder 5a of a compressed fluid such as nitrogen may be used. When using such a cylinder, one which supplies compressed fluid at a pressure of approximately 10 kg/cm² is sufficient.

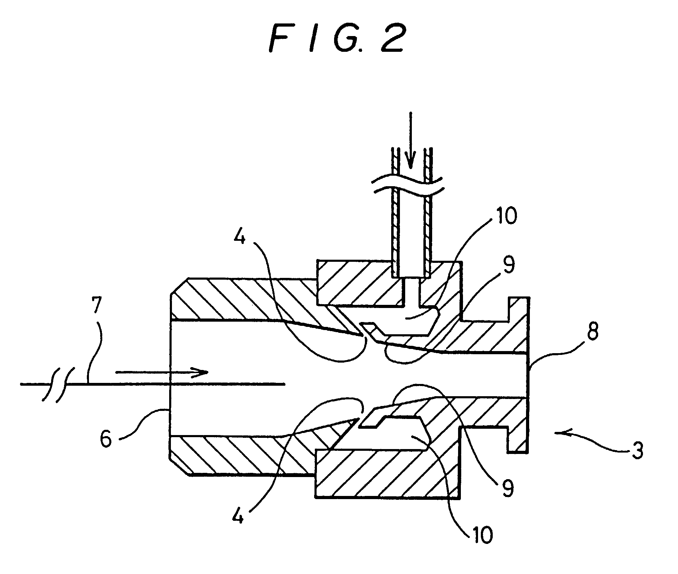

A typical example of a Coanda spiral flow unit 3 is shown in Fig. 2, having an annular Coanda slit 4, an angled surface 9 adjacent the slit 4, a compressed fluid distribution chamber 10, a compressed fluid supply passage 11, an exit port 8 and a suction port 6.

By angling the surface 9 at between 5° and 70° to the axis a spiral flow occurs and an intense vacuum suction force is generated at the suction port 6, thereby sucking in the wire 7.

Such a device is very effective in achieving easy and efficient feeding of a wire through a narrow tube having many bends, and has been used, for example, to feed an optical fiber in one pass in a short period of time through a tube having a length of 500m or even 1,000m.

However, the above described device does have certain disadvantages. Thus, in the case of a work site where space is restricted so that the point where a wire is to be fed is only manually accessible, or where the operation has to be carried out at an elevated level by standing on a trestle, for example, wire installation using such a device is not possible. Also the on-off actuation and the adjustment of the supply of compressed fluid can be very difficult in such circumstances.

It is known to use valves in the form of pistol grips, and one such valve is shown in FR-A-2102198 (Van Bellinghen). In this document, the valve is used to control the flow of compressed air during the installation of an electrical conductor. However, the method of installation does not use Coanda flow, and indeed could not be used with Coanda flow.

According to the present invention there is provided a device for feeding a wire through a tube, comprising a Coanda spiral flow unit having an inlet port and an outlet port with a Coanda slit therebetween, characterised in that said unit is mounted on a manually grippable handle provided with a manually operable control valve for the supply of compressed fluid to said unit, whereby the device is readily portable.

An embodiment of the invention will now be described by way of example and with reference to the accompanying drawings, in which:-
Fig. 1 is a diagrammatic view of a known system;
Fig. 2 is a cross-sectional view of a Coanda spiral flow unit used in the system of Fig. 1;
Fig. 3 is a cross-sectional view of a device according to the present invention; and
Fig. 4 is a diagrammatic view illustrating the manner of use of the device of Fig. 3.

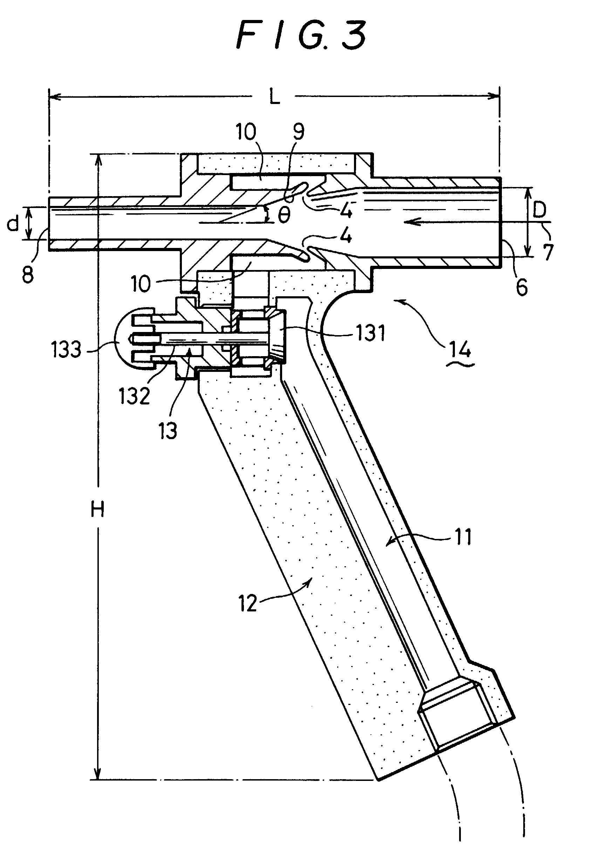

In accordance with the present invention, and as shown in Fig. 3 by way of example, a Coanda spiral flow device is provided in readily portable form with a handle incorporating a compressed fluid supply valve, thus facilitating operation even at an operating site where space is restricted.

Thus, as shown in Fig. 3, a portable wire installation device 14 comprises a handle 12 having therein a compressed fluid supply passage 11, and a compressed fluid supply valve 13 is provided at the head of the handle 12. The handle 12 carries a Coanda spiral flow unit whose parts are given the same reference numerals as in Fig. 2.

The valve unit 13 comprises a poppet valve 131 mounted on a sliding shaft 132 for opening and closing the same, and a manually operable button 133 for operating the shaft 132. Thus the supply of compressed fluid to distribution chamber 10 is controlled by holding the handle 12 and pressing the button 133 with a finger, thus permitting adjustment of supply of fluid as well as turning it on and off.

If desired, finger grooves may be provided on the handle 12 to facilitate gripping the same. Furthermore, by making the handle 12 expandable in length, it is possible to install a wire even at a place where the entrance to the tube is not otherwise manually accessible.

Thus the present invention, at least in its preferred forms as described above, permits efficient wire installation even at locations where space is restricted and also puts the means for controlling the supply of compressed fluid immediately to hand, thus permitting easy and efficient wire installation.

### EXAMPLE

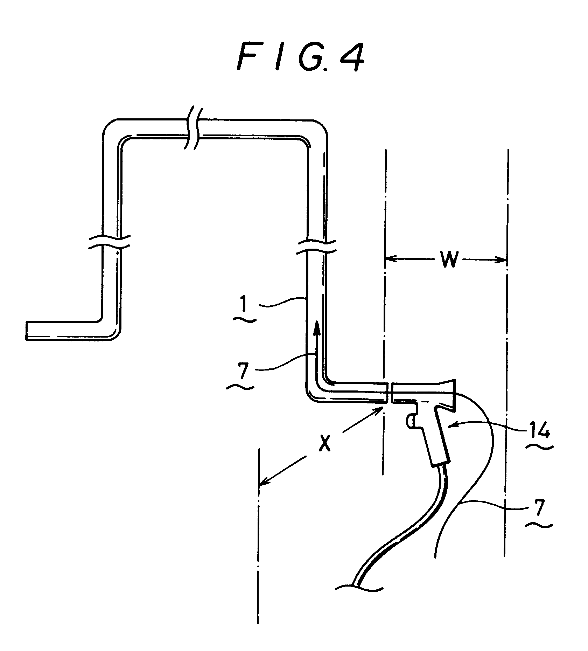

Using a portable Coanda spiral flow wire installation device 14 as shown in Fig. 3, an optical fiber 7 having a diameter of 1.8 mm was installed in a plastic tube 1 (Fig. 4) having four bends, a diameter of 8 mm and a length of 60m. In the device 14, the distance L between the suction port 6 and the outlet port 8 was 10.3 cm; the height H from the top of the device to the bottom end of the handle was 13 cm; the suction port 6 had a diameter D of 14.85 mm; the outlet port 8 had a diameter D of 4 mm; the annular Coanda slit 4 had a width of 0.2 mm; and the angled surface 9 had an angle of 15° to the axis. In this Example the device 14 was operated under very restricted conditions involving an operating space width W of 20 cm and depth X of 60 cm. Compressed air was supplied to the device under a pressure of 8 kg/cm² to install the fiber, which installation was completed in only a few seconds.

Installation of a similar fiber was attempted, on the other hand, by connecting a flexible tube to a conventional wire installation device generating ordinary turbulence, but it was found to be impossible to install the wire. Using a wire installation device as shown in Figs. 1 and 2, and by connecting a flexible tube between the device and the tube 1, it was possible to install the fiber, but only with poor operating efficiency.

## Claims

1. A device for feeding a wire through a tube, comprising a Coanda spiral flow unit (14) having an inlet port (6) and an outlet port (8) with a Coanda slit (4) therebetween, characterised in that said unit is mounted on a manually grippable handle (12) provided with a manually operable control valve (13) for the supply of compressed fluid to said unit, whereby the device is readily portable.

2. A device as claimed in claim 1, wherein the said handle (12) is formed with a supply passage (11) for said compressed fluid, said control valve (13) being in said passage.

3. A device as claimed in claim 1 or 2, which is in the general form of a pistol, the said Coanda spiral flow unit (14) forming the pistol barrel and the said handle (12) forming the pistol grip.

4. A device as claimed in any of claims 1 to 3, wherein the said handle is extendible in length.

## Patentansprüche

1. Vorrichtung zum Vorschieben eines Drahtes durch ein Rohr, umfassend eine Coanda-Spiralströmungseinheit (14) mit einer Einlaßöffnung (6) und einer Auslaßöffnung (8), zwischen denen sich ein Coandaschlitz (4) befindet, dadurch gekennzeichnet, daß die Einheit auf einem von Hand greifbaren Handgriff (12) angebracht ist, der mit einem von Hand betätigbaren Steuerventil (13) versehen ist, um der Einheit Druckfluid zuzuführen, wodurch die Vorrichtung leicht tragbar ist.

2. Vorrichtung nach Anspruch 1, bei der der Handgriff (12) mit einem Versorgungsdurchlaß (11) für das Druckfluid gebildet ist, wobei sich das Steuerventil (13) in dem Durchlaß befindet.

3. Vorrichtung nach Anspruch 1 oder 2, die in der allgemeinen Form einer Pistole vorliegt, wobei die Coanda-Spiralströmungseinheit (14) den Pistolenlauf bildet und der Handgriff (12) den Pistolengriff bildet.

4. Vorrichtung nach einem der Ansprüche 1 bis 3, bei der der Handgriff in der Länge verlängerbar ist.

## Revendications

1. Dispositif destiné à amener un fil à travers un tube, comprenant une unité à écoulement en spirale par effet Coanda (14) possédant un orifice d'entrée (6) et un orifice de sortie (8) ayant entre eux une fente à effet Coanda (4), caractérisé en ce que ladite unité est montée sur une poignée saisissable manuellement (12) pourvue d'une vanne de commande actionnable manuellement (13) destinée à la fourniture de fluide comprimé à ladite unité, grâce à quoi le dispositif est facilement portable.

2. Dispositif selon la revendication 1, dans lequel ladite poignée (12) est formée avec un passage de fourniture (11) dudit fluide comprimé, ladite vanne de commande (13) se trouvant dans ledit passage.

3. Dispositif selon la revendication 1 ou 2, lequel a une forme globale de pistolet, ladite unité à écoulement en spirale par effet Coanda (14) formant le canon du pistolet et ladite poignée (12) formant la crosse du pistolet.

4. Dispositif selon l'une quelconque des revendications 1 à 3, dans lequel ladite poignée peut être étirée en longueur.
